# EUROPEAN PATENT SPECIFICATION

(11) **EP 1 213 598 B1**
(45) Date of publication and mention of the grant of the patent: **01.03.2006**
(21) Application number: 01205071.2
(22) Date of filing: 25.04.1997
(51) Int. Cl.: G02F 1/1333, H04N 9/31, G02B 7/18, G02B 27/10

(54) **Mounting mechanism for mounting a light valve on a prism**
Befestigungsmechanismus für die Befestigung eines Lichtventils auf einem Prisma
Mécanisme de montage pour monter une valve à faisceau lumineux sur un prisme

(30) Priority: 26.04.1996 JP 10797196; 15.11.1996 JP 30533996
(43) Date of publication of application: 12.06.2002
(62) Divisional of application: 97302870.7
(73) Proprietor: SEIKO EPSON CORPORATION, Tokyo 163 (JP)
(72) Inventor: Fujimori, Motoyuki, Suwa-shi, Nagano-ken 392-8502 (JP); Shinohara, Kazuto, Suwa-shi, Nagano-ken 392-8502 (JP); Kitabayashi, Masashi, Suwa-shi, Nagano-ken 392-8502 (JP); Iinuma, Kazuyuki, Suwa-shi, Nagano-ken 392-8502 (JP)
(74) Representative: Sturt, Clifford Mark

(56) References cited:
- WO-A-95/12142
- US-A- 5 455 678
- US-A- 5 605 390
- US-A- 5 978 054
- PATENT ABSTRACTS OF JAPAN vol. 018, no. 218 (E-1539), 19 April 1994 (1994-04-19) & JP 06 014326 A (SEIKO EPSON CORP), 21 January 1994 (1994-01-21)
- PATENT ABSTRACTS OF JAPAN vol. 1996, no. 11, 29 November 1996 (1996-11-29) -& JP 08 184797 A (SEIKO EPSON CORP), 16 July 1996 (1996-07-16)
- PATENT ABSTRACTS OF JAPAN vol. 016, no. 064 (E-1167), 18 February 1992 (1992-02-18) & JP 03 259691 A (MATSUSHITA ELECTRIC IND CO LTD), 19 November 1991 (1991-11-19)
- PATENT ABSTRACTS OF JAPAN vol. 010, no. 305 (P-507), 17 October 1986 (1986-10-17) & JP 61 118707 A (MATSUSHITA ELECTRIC IND CO LTD), 6 June 1986 (1986-06-06)

## Description

The present invention relates to a projection type display device of the type which separates a white beam from a light source into beams of three colours of red, blue and green, modulates each colour beam through a light valve such as a liquid crystal panel in accordance with image information, synthesises the modulated colour beams by light synthesising means, and projects the synthesised beam onto a projection surface through projecting means in an enlarged state.

More specifically, the present invention relates to a mechanism for mounting a liquid crystal panel to a prism composite constituting the light synthesising means of a projection type display device of this type.

In a projection type display device constructed as described above, a liquid crystal panel serving as a light valve is mounted to the light incident surface for each light beam of the prism composite constituting the light synthesising means. An example of a mechanism for mounting a liquid crystal panel to a prism composite is disclosed in Japanese Unexamined Patent Publication No. 6-118368. In this type of mounting mechanism, the liquid crystal panel serving as the light valve is directly glued to the light incident surface of the prism composite by means of an adhesive and fixed thereto.

When the light valve is directly glued and fixed to the light incident surface, it is possible, in particular, to omit the mechanism for mutual pixel matching (alignment) of a plurality of light valves for modulating the light beam separated into three colours of red, green and blue, and the mechanism for adjusting (focus adjustment) such that each image formation plane constituting the subject is positioned within the permissible depth of focus of the projection lens. Thus, it is possible to realise a reduction in the size and weight of the optical system of the projection type display device and a reduction in the number of parts.

JP 6014326 and WO 95/12142 both disclose projectors in which both a fixation frame plate and a light valve frame plate are used to mount a liquid crystal light valve to each of three sides of a prism.

### [Problems to be Solved by the Invention]

However, when the light valve is directly glued and fixed to the light incident surface of the prism composite, the following problems are involved.

First, when external light enters the interior of the device, there is a fear of the external light entering upon the light valve. When the light valve receives such light, there is a fear of each element of the light valve malfunctioning.

Second, treating the light valve in a condition in which it is directly touched is not desirable since that will lead to problems such as breakage thereof. For example, when the light valve is glued to the prism composite, chucking the light valve directly with a jig will lead to a fear of the edge, corner, etc. of the light valve being damaged. When a light valve which is vulnerable to static electricity, such as a liquid crystal panel, is used, it is not desirable for the operator to hold the light valve directly by hand and glue it to the prism composite.

Third, the light valve glued to the prism composite can generate a defect or the like in a part of its pixels as a result of changes with time. When a defect has been generated in the light valve, it is necessary to replace it with a new one. However, since the light valve is glued and fixed to the prism composite, it is difficult to replace only the light valve having a defect. That is, it is not easy to detach the liquid crystal panel glued and fixed to the light incident surface of the prism composite without damaging the light incident surface. For this reason, it is necessary in some cases to also replace the prism composite, which is not economical.

It is an object of the present invention to realise a projection type display device equipped with a light valve mounting mechanism capable of solving the above problems.

### [Means for Solving the Problems]

According to a first aspect of the present invention, there is provided a mounting mechanism according to claim 1.

According to another aspect of the present invention, there is provided a projector according to claim 7.

According to yet another aspect of the present invention, there is provided a mounting mechanism according to claim 13.

To achieve the above object, the present invention provides a projection type display device of the type which separates a beam from a light source into beams of a plurality of colours, modulates each colour beam through a light valve in accordance with image information, synthesises the modulated colour beams by light synthesising means, and projects the synthesised beam onto a projection surface through projecting means in an enlarged state, wherein the periphery of the light valve is protected against intrusion of external light, damage, etc. and wherein it is not necessary for the light valve to be directly glued and fixed to the light synthesising means.

The positioning means may comprise an adjusting member for adjusting the position of the light valve. In this case, it is desirable for the light valve frame plate to be provided with an adjusting member guiding means.

Further, it is desirable for the positioning means to be provided in the vicinity of the centre of opposite side portions of the light valve frame plate, whereby it is possible to avoid concentration of stress due to thermal deformation of the member constituting the object of positioning.

In order that the fixation frame plate and the light valve frame plate may be easily handled with a jig or the like, it is desirable for the fixation frame plate and the light valve frame plate to be equipped with an engagement section for chucking the plates.

Next, in the present invention, there is adopted, in addition to the fixation frame plate and the light valve frame plate, an intermediate frame plate arranged between the fixation frame plate and the light valve frame plate. In this case, this intermediate frame plate is fixed to the fixation frame plate by the fixing means, and fixed in the condition in which it is positioned on the light valve frame plate by the positioning means.

In this case, there is adopted a temporal fixing means for temporarily fixing the intermediate frame plate and the light valve frame plate. It is desirable that the intermediate plate temporarily fixed by the temporal fixing means and the light valve frame plate be positioned by the positioning means. This makes it possible to perform the temporal fixing operation in the temporarily fixed state, whereby the positioning operation can be easily performed.

The temporal fixing means may comprise an engagement protrusion formed on one of the intermediate frame plate and the light valve frame plate and an engagement hole formed in the other plate. In this case, they can be temporarily fixed by an adhesive.

Even in the case in which an intermediate plate is provided, the positioning means may comprise adjusting parts for adjusting the position of the light valve. Further, the light valve frame plate may be provided with an adjusting member guiding means.

Further, the positioning means may be provided in the vicinity of the centre of opposite side portions of the light valve frame plate.

In the present invention, the light valve may be placed between the light valve frame plate and the fixation frame plate.

In the projection type display device of the present invention, constructed as described above, the light valve is held by the light valve frame plate. Further, the fixation frame plate is fixed to the light incident surface of the light synthesising means, and the light valve frame plate holding the light valve is detachably fixed to this fixation frame plate directly or through the intermediation of the intermediate frame plate.

Thus, when a defect is generated in the light valve as a result of change with time, the light valve frame plate holding the light valve is detached from the fixation frame plate fixed to the light synthesising means and a light valve frame plate holding a new light valve is mounted to the fixation frame plate. In this way, the light valve is not directly fixed to the light synthesising means, so that the light valve replacing operation can be easily conducted. Further, when performing the replacing operation, the surface of the light synthesising means is not damaged.

Further, in the projection type display device of the present invention, the periphery of the light valve is protected by the light valve frame plate, so that, at the time, for example, of mounting it to the light synthesising means, etc., the operation is not conducted with the light valve being directly touched. Thus, it is possible to prevent the light valve from being damaged. Further, in the condition in which the light valve is incorporated in the projection type display device for use, there is no fear of external light intruding to cause malfunction since its periphery is covered with the light valve frame plate.

A liquid crystal device may be used as the above-mentioned light valve. Further, the present invention is particularly effective in the case of a liquid crystal device which is vulnerable to static electricity and which is liable to cause malfunction when external light intrudes.

Further, the light valve can be classified into two types: the light transmission type and the light reflection type. When a light reflection type light valve is used, the light synthesising means generally also serves as light separation means for separating a beam from the light source into beams of a plurality of colours.

There are two types of projection type display devices: a front surface projection type display device in which projection is effected from the side on which the projection surface is observed, and a back surface projection type display device in which projection is effected from the side opposite to the side on which the projection surface is observed. The present invention is applicable to both types.

When a dichroic prism is used as the light synthesising means, the light valve is positioned and fixed to the surface of the dichroic prism by using a fixation frame plate, a light valve frame plate, a fixing means and a positioning means. This fixing structure may be applied to a structure such as a camera in which a solid-state image sensing device such as CCD is positioned and fixed to a colour separation prism.

### [Description of the Embodiments]

A projection type display device to which the present invention is applied will now be described, by way of example only, with reference to the accompanying diagrammatic figures, in which;

### [Brief Description of the Drawings]

Fig. 1 is an outward perspective view of a projection type display device to which the present invention is applied.
Fig. 2 is a diagram showing the arrangement of the components in the interior of the device of Fig. 1, of which Fig. 2(A) is a diagram showing the planar arrangement thereof, and Fig. 2(B) is a diagram showing the three-dimensional arrangement thereof.
Fig. 3(A) is a diagram exclusively showing the optical unit and the projection lens unit, and Fig. 3(B) is a schematic diagram showing the construction of the optical system.
Fig. 4 is a partial perspective view exclusively showing the head plate and the prism unit and the liquid crystal panel unit supported thereby.
Fig. 5 is an exploded perspective view showing the construction of the liquid crystal panel unit of Fig. 4.
Fig. 6 is an exploded perspective view showing a modification of the liquid crystal panel unit of Fig. 5.
Fig. 7 is an exploded perspective view showing an unclaimed modification of the liquid crystal panel unit of Fig. 5.
Fig. 8 is an exploded perspective view showing comparative example of the liquid crystal panel unit.
Fig. 9 is a perspective view showing a modification of the first fixation frame plate of Fig. 8.

### (Overall Construction of the Device)

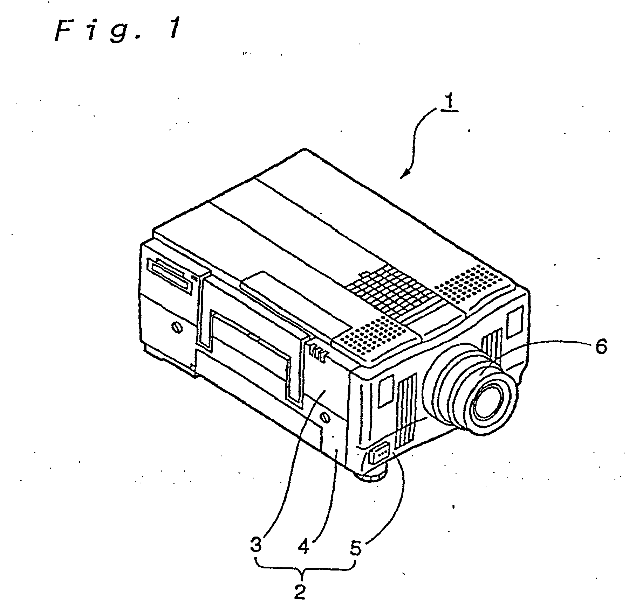

Fig. 1 shows the outward appearance of a projection type display device 1 to which the present invention is applied. The projection type display device 1 of this example has a case 2 which is in the form of a rectangular parallelopiped. This case 2 is basically composed of an upper case 3, a lower case 4 and a front case 5 defining the front face of the device. The forward end portion of a projection lens unit 6 protrudes from the centre of the front case 5.

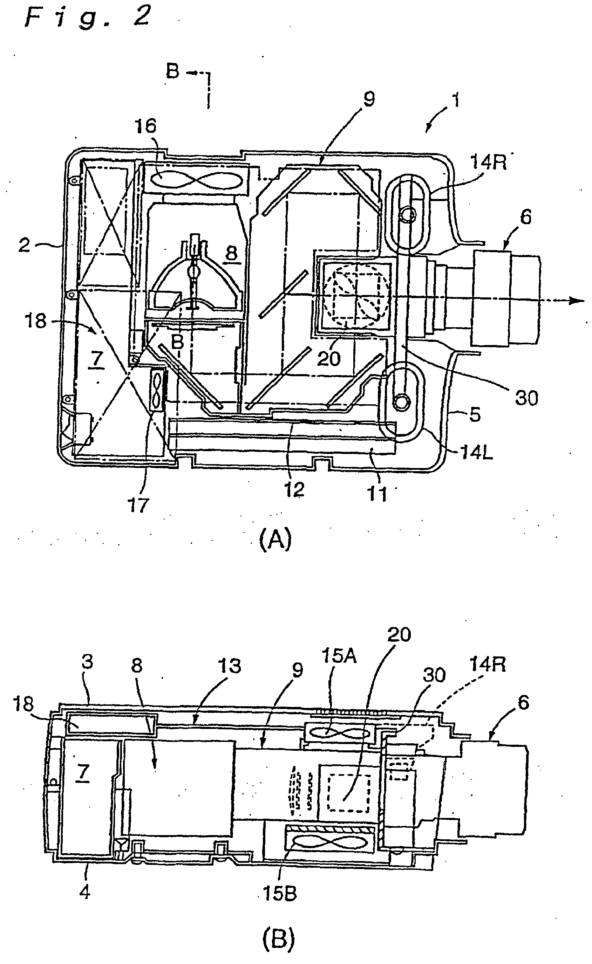

Fig. 2 shows the arrangement of the components inside the case 2 of the projection type display device 1. As shown in this drawing, a power source unit 7 is arranged at the rear end of the interior of the case 2. At positions nearer to the front side of the device, there are arranged a light source lamp unit 8 and an optical unit 9. At the centre of the front side of the optical unit 9, there is situated the base end of a projection lens unit 6. On one side of the optical unit 9, an interface board 11 on which an input/output interface circuit is mounted is arranged to extend in the longitudinal direction of the device. A video board 12 on which a video signal processing circuit is mounted is arranged parallel to it. Further, a control board 13 for device drive control is arranged above the light source lamp unit 8 and the optical unit 9. In the right and left corners of the front side of the device, there are arranged speakers 14R and 14L.

At the centre of the upper side of the optical unit 9, an intake fan 15A for cooling is arranged, and, at the centre of the bottom side of the optical unit 9, a circulation fan 15B for forming a circulation flow for cooling is arranged. Further, on the device side which corresponds to the back side of the light source lamp unit 8, there is arranged an air discharge fan 16. Further, at the position of the power source unit 7 facing the ends of the boards 11 and 12, there is arranged an auxiliary cooling fan 17 for sucking the cooling air flow from the intake fan 15A into the power source unit 7.

Further, directly above the power source unit 7, a floppy disk driving unit 18 is arranged at a position on the left side of the device.

### (Optical Unit and Optical System)

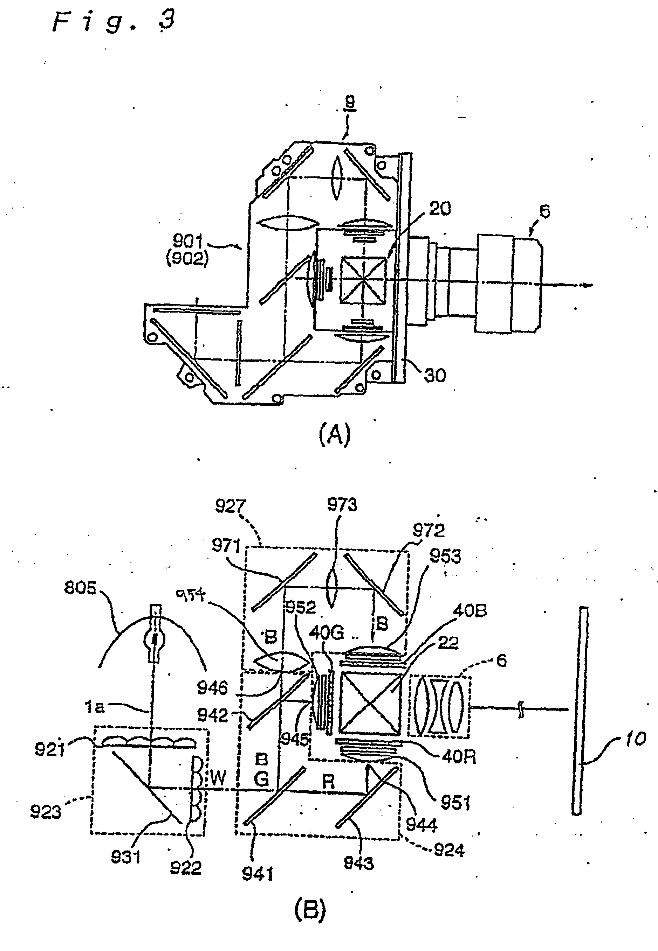

Fig. 3(A) shows the portion of the device corresponding to the optical unit 9, a prism unit 20 and the projection lens unit 6. As shown in the drawing, the optical unit 9 has optical elements other than a prism unit 20 which constitutes its colour synthesising means placed between upper and lower light guides 901 and 902. The upper and lower light guides 901 and 902 are respectively fixed to the upper case 3 and the lower case 4 by fixing screws. Further, these upper and lower light guides 901 and 902 are fixed to the side of the prism unit 20 similarly by fixing screws.

The prism unit 20 is fixed to the back side of a thick head plate 30, which is a die-cast plate, by fixing screws. To the front side of this head plate 30, the base side of the projection lens unit 6, which serves as the projection means, is similarly fixed by fixing screws. Thus, in this example, the prism unit 20 and the projection lens unit 6 are integrally fixed together with the head plate 30 therebetween. In this way, these two components are integrated together, with the head plate 30, which is highly rigid, placed therebetween. Thus, even if an impact or the like is applied to the side of the projection lens unit 6, no positional deviation is generated in these two components. Fig. 3(B) schematically shows the construction of the optical system incorporated in the projection type display device 1. The optical system of this example comprises: a light source lamp 805; an illumination optical system 923 consisting of integrator lenses 921 and 922 which are uniform illumination optical elements; a colour separation optical system 924 for separating a white beam W output from this illumination optical system 923 into colour beams R, G and B of red, green and blue; three liquid crystal panels 40R, 40G and 40B serving as light valves for modulating the colour beams; a prism composite 22 serving as a colour synthesising optical system for synthesising the modulated colour beams; and a projection lens unit 6 for projecting the synthesised beam onto a projection surface 7 in an enlarged state. Further, there is provided a light guide system 927 for guiding the blue colour beam B of the colour beams separated by the colour separation optical system 924 to the corresponding liquid crystal panel 40B.

The light source lamp 805 may consist of a halogen lamp, a metal halide lamp, a xenon lamp or the like. The uniform illumination optical system 923 is equipped with a reflection mirror 931, which serves to bend the optical axis la of the beam output from the illumination optical system by 90° so that it is output forwards in the device. The integrator lenses 92 and 922 are arranged so as to be orthogonal to each other with this mirror 931 placed therebetween.

The colour separation optical system 924 is composed of a blue/green reflection dichroic mirror 941, a green reflection dichroic mirror 942 and a reflection mirror 943. The blue beam B and the green beam G contained in the white beam W are reflected at right angles by the blue/green reflection dichroic mirror 941 and directed toward the green reflection dichroic mirror 942. The red beam R is transmitted through this mirror 941 and reflected at right angles by the reflection mirror 943 to be output to the prism composite 22 from an output section 944 for the red beam. Of the blue and green beams B and G reflected by the mirror 941, only the green beam G is reflected at right angles by the green reflection dichroic mirror 942 and output to the prism composite 22 from an output section 945 for the green beam. The blue beam B, which is transmitted through this mirror 942, is output to the light guide system from an output section 946 for the blue beam. In this example, the distances from the output section for the white beam of the uniform illumination optical elements to the output sections 944, 945 and 946 for the colour beams in the colour separation system 924 are all set to be the same.

On the output sides of the output sections 944 and 945 for the colour beams of the colour separation system 924, condenser lenses 951 and 952 are arranged, respectively. Thus, the colour beams output from the output sections are incident upon these condenser lenses 951 and 952 to be turned into parallel beams.

If the colour beams R and G thus turned into parallel beams respectively incident upon the liquid crystal panels 40R and 40G are modulated, then image information corresponding to each colour beam is added thereto. That is, these liquid crystal panels 40R and 40G undergo switching control in response to image signals corresponding to image information by a driving means (not shown), whereby the colour beams passing therethrough are modulated. A well-known driving means may be used as this driving means. The blue beam B is guided to the corresponding liquid crystal panel 40B through the light guide system 927 to be similarly modulated there in accordance with image information. The liquid crystal panels 40R, 40G and 40B used in this example may consist, for example, of poly-silicon-TFT used as switching elements.

The light guide system 927 is composed of an input side lens 954, an input side reflection mirror 971, an output side reflection mirror 972, an intermediate lens 973 arranged between two mirrors 971 and 972, and the condenser lens 953 which is arranged in front of the liquid crystal panel 40B. As for the optical path lengths of the colour beams, i.e., the distances from the light source lamp 805 to the respective liquid crystal panels, that of the blue beam B is the longest. Thus, the light quantity loss of this beam is the greatest. However, due to the provision of the light guide system 927, the light quantity loss can be restrained. Thus, it is possible to make the optical path lengths of the colour beams substantially equivalent to each other.

Next, the colour beams modulated by passing through the liquid crystal panels 40R, 40G and 40B are incident upon the prism composite 22, where they are synthesised. In this example, the prism composite 22 consisting of a dichroic prism is used to form the colour synthesising optical system. Colour images synthesised here are projected in an enlarged state onto a projection surface 10, which is at a predetermined position, through the projection lens unit 6.

### (Construction of Prism Unit and Head Plate)

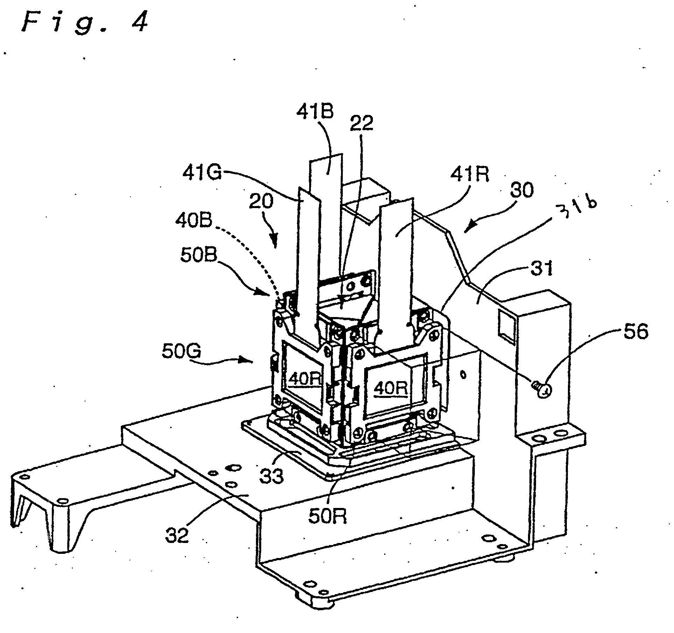

Fig. 4 exclusively shows the head plate 30 and the prism unit 20 attached to this head plate 30. As shown in the drawing, the head plate 30 is basically composed of a vertical wall 31 extending vertically in the width direction of the device and a bottom wall 32 extending horizontally from the lower end of this vertical wall 31. The vertical wall 31 has a rectangular opening 31b through which the output beam from the prism unit 20 is to be transmitted. Further, a number of reinforcing ribs are formed on this vertical wall 31 to enhance its rigidity. The prism unit 20 and the projection lens unit 6 are aligned and secured in position with this vertical wall 31 placed therebetween (See Fig. 3(A)). Thus, these components are firmly integrated, so that there is very little fear of a mutual positional deviation being generated even if an impact or the like is applied to them.

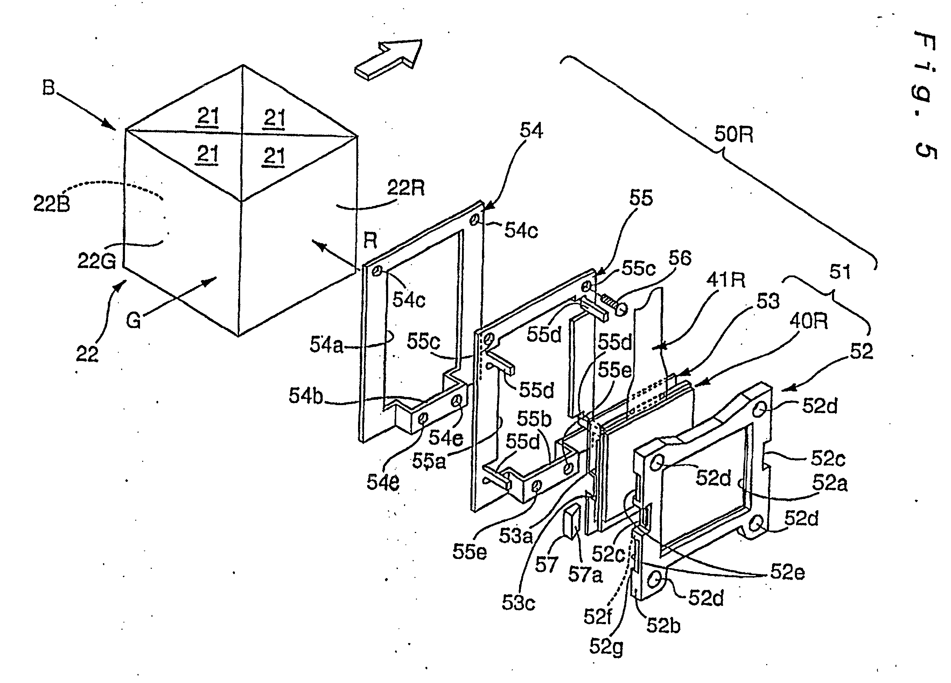

The prism unit 20 is arranged on the upper surface of the bottom wall 32 of the head plate 30. The prism unit 20 is equipped with a prism composite 22 in the form of a rectangular parallelopiped formed by joining together the slant faces of four prisms 21, each having a sectional configuration in the form of a right-angled isosceles triangle (See Fig. 5), and a prism support plate 33. The bottom portion of the prism composite 22 is fixed to the surface of the prism support plate 33 by adhesion or the like, and the prism support plate 33 is mounted on and fixed to the bottom wall 32 of the head plate. Liquid crystal panel units 50R, 50G and 50B of the same construction are mounted to those three side surfaces of the side surfaces of the prism composite 22 which function as light incident surfaces. Liquid crystal panels 40R, 40G and 40B are held by the liquid crystal panel units 50R, 50G and 50B, respectively.

### (Liquid Crystal Panel Unit)

Of the liquid crystal panel units 50R, 50G and 50B, Fig. 5 shows, in an exploded view, the components of the liquid crystal panel unit 50R which holds the liquid crystal panel 40R. With reference to this drawing, the mounting structure for mounting the liquid crystal panel 40R to the prism composite 22 will be described. As shown in Fig. 5, the liquid crystal panel unit 50R is equipped with a light valve frame plate or panel frame plate 51 for holding the liquid crystal panel 40R, and this panel frame plate 51 comprises a first frame plate 52 and a second frame plate 53. The liquid crystal panel 40R is held between these frame plates 52 and 53.

The liquid crystal panel unit 50R is further equipped with a fixation frame plate 54 which is glued and fixed to the light incident surface 22R of the prism composite 22. The panel frame plate 51 is detachably fixed to a side of this fixation frame plate 54 through the intermediation of an intermediate plate 55.

The structure of each section will be described in detail. First, the panel frame plate 51 will be described. Its first frame plate 52 is equipped with a rectangular opening 52a for transmitting light and a peripheral wall 52b with an uniform thickness. The second frame plate 53 also has a rectangular opening 53a for transmitting light. The size of this second frame plate 53 is such that it is fitted in the inner side of the peripheral wall 52b. Further, an engagement protrusion 53c is formed at the centre of each of the right and left edges of the second frame plate 53. An engagement groove 52c into which this engagement protrusion 53c is to be fitted is formed at the centre of each of the right and left outer side of the peripheral wall 52b. Thus, when the first and second frame plates 52 and 53 are superimposed one upon the other with the liquid crystal panel 40R placed therebetween, and the engagement protrusions 53c are fitted into the engagement grooves 52c, the panel frame body 51, which holds the liquid crystal panel 40R between the frame plates 52 and 53, is formed.

The intermediate frame plate 55 is a rectangular frame having a size which is substantially the same as or a size larger than that of the first frame plate 52 and equipped with a rectangular opening 55a for transmitting light. In the four corners of the rectangular opening 55a of this intermediate frame plate 55, there are formed engagement protrusions 55d extending perpendicularly from the surface of the frame plate. The first frame plate 52 of the panel frame plate 51 has at positions corresponding to the engagement protrusions 55d engagement holes 52d into which these engagement protrusions can be inserted. Thus, when the panel frame plate 51 and the intermediate frame plate 55 are superimposed one upon the other with the engagement holes 52d and the engagement protrusions 55b being engaged with each other, a temporarily fixed condition is realised, in which the engagement protrusions 55d are inserted into the engagement holes 52d.

The fixation frame plate 54 is also a rectangular frame plate having a rectangular opening 54a for transmitting light. The back surface of this fixation frame plate 54 is fixed to the light incident surface 22R of the prism composite 22 by an adhesive. Screw holes 54c are formed in the right and left upper corners of this fixation frame plate 54. Screw holes 55c corresponding to these screw holes 54c are formed in the intermediate frame plate 55.

Further, in the lower frame section of the fixation frame plate 54, a protruding frame 54b protruding toward the intermediate frame plate 55 is formed. In the lower frame section of the intermediate frame plate 55, a protruding frame 55b into which the protruding frame 54b is to be fitted from the back side is formed. The panel frame plate 51 is held by being placed on these protruding frames 54b and 55b. Further, these protruding frames 54b and 55b have right and left screw holes 54e and 55e. ln this way, screw holes 54c, 54e and 55c, 55e are formed at mutually corresponding positions of the fixation frame plate 54 and the intermediate frame plate 55, and these frame plates are fastened together by four flat countersunk head screws 56 (of which only one is shown in the drawing) threadedly engaged with these screw holes. That is, the intermediate frame plate 55 is screwed to the fixation frame plate 54 glued to the prism composite 22.

Further, the liquid crystal panel unit 50R is equipped with four wedges 57 serving as a positioning means. Fig. 5 shows only one of these wedges. Wedge guide surfaces 52e are formed in the right and left sections of the peripheral wall of the first frame plate 52 of the panel frame plate 51. After temporarily fixing the panel frame plate 51 to the intermediate frame plate 55, the four wedges 57 are inserted into the right and left sides of the first frame plate 52, and the insertion amount of these wedges 57 is adjusted, whereby the positioning of the liquid crystal panel 40R is effected.

The liquid crystal panel unit 50R, constructed as described above, is mounted to the light incident surface 22R of the prism composite 22 by the following procedures: first, the panel frame plate 51 holding the liquid crystal panel 40R is prepared. Next, the fixation frame plate 54 is positioned on the face 22R of the prism composite 22 and is glued and fixed thereto. The adhesive used may be an ultraviolet setting type adhesive or the like. Next, the positioning of the intermediate frame plate 55 is effected on the surface of the fixation frame plate 54 glued and fixed, and the intermediate frame plate 55 is fastened thereto by the four screws 56. After this, the panel frame plate 51 holding the liquid crystal panel 40R is positioned on the intermediate frame plate 55 and temporarily fixed thereto. That is, the engagement protrusions 55d of the intermediate frame plate 55 are aligned with respect to the engagement holes 52d of the panel frame plate 51 and, in this condition, the panel frame plate 51 is pushed toward the intermediate frame plate 55. When the fixation frame plate 54 and the intermediate frame plate 55 are integrated with each other by the screws 56 before gluing and fixing the fixation frame plate 54 to the prism composite 22, it becomes easier to achieve a high level of positional accuracy. After this, the positioning of the liquid crystal panel 40R with respect to the face 22R of the prism composite 22 is effected by using the wedges 57 serving as positioning means. That is, the four wedges 57 are inserted into the gap between the panel frame plate 51 and the intermediate frame plate 55, temporarily fixed to each other, along the wedge guide surfaces 52e formed on the first frame plate 52. Then, by adjusting the insertion amount of the wedges 57, the alignment and focus adjustment of the liquid crystal panel 40R are effected.

When the positioning has been achieved, these wedges 57 are glued and fixed to the panel frame plate 51 and the intermediate frame plate 55, which constitute the object of positioning, by using an adhesive. In this case also, the adhesive used may be an ultraviolet setting type adhesive.

Here, the positioning of the wedges 57 and the gluing and fixing of the wedges 57 will be described in more detail in accordance with the order of process. First, the focusing plane of the liquid crystal panel 40G is set in the focusing plane of the projection lens 6 by using a dedicated adjusting device. In this condition, the engagement protrusions 55d of the intermediate plate 55 are, as described above, inserted into the engagement holes 52d of the light valve frame plate 51 to thereby define a gap, into which an ultraviolet setting type adhesive is injected, and temporal fixation is effected by ultraviolet radiation. Next, by the intermediate frame plate 55 and the wedge guide surfaces 52e formed on the first frame plate 52, ultraviolet radiation is effected on the ultraviolet setting type adhesive from the exposed end surfaces of the wedges 57 to thereby effect final fixation. By using the liquid crystal panel 40G arranged at the centre of the liquid crystal panels 40G, 40R and 40B as a reference, focusing adjustment and mutual pixel matching adjustment are similarly effected on the liquid crystal panels 40R and 40B and temporal fixation and final fixation are effected.

Since the temporal fixation is performed by setting the components in an adjusting device, with the prism composite 22 and the projection lens 6 being mounted on the head plate 30, an optimum adjustment adapted to the characteristics of each component is possible. Further, the chucking of the light valve frame plate 51 in the adjusting device is conducted by using the outer configuration of the first frame plate 52a.

Since the liquid crystal panel units 50G and 50B holding the liquid crystal panels other than the liquid crystal panel 40R, i.e., the liquid crystal panels 40G and 40B, have the same construction, a description of them will be omitted. In this way, the liquid crystal panel units 50R, 50G and 50B are attached to the three surfaces 22R, 22B and 22G of the prism composite 22, with the result that the state as shown in Fig. 4 is achieved. In Fig. 4, the components extending upwards from the liquid crystal panel units 50R, 50G and 50B are flexible cables 41R, 41G and 41B for wiring.

The liquid crystal panel unit 50R, constructed as described above, provides the following advantages:

First, the periphery of the liquid crystal panel 40R is covered with and protected by the rectangular panel frame plate 51. Thus, there is no need to directly touch the liquid crystal panel 40R when mounting it to the prism composite 22. As a result, it is possible to prevent the liquid crystal panel from being hit by other parts to thereby suffer breakage or damage. Further, since the periphery of the liquid crystal panel 40R is covered with the frame plate 51, it is possible to intercept external light. Thus, even if external light is allowed to intrude, no malfunction occurs in the liquid crystal panel 40.

Second, the panel frame plate 51 holding the liquid crystal panel 40R is detachably fastened by screws to the face 22R of the prism composite 22 through the intermediation of the intermediate frame plate 55. Thus, when, for example, a defect is generated in the liquid crystal panel 40R, it can be replaced by a simple operation of detaching the screws 56. Further, since the liquid crystal panel 40R is not directly glued and fixed to the prism composite 22, there is no fear of the sides of the prism composite 22 being damaged. Further, it is possible to use expensive parts without wasting them.

Third, the panel frame member 51 holding the liquid crystal panel 40R can be temporarily fixed to the intermediate frame plate 55. After achieving the temporarily fixed state, the positioning of the liquid crystal panel 40R with respect to the face 22R of the prism composite 22 can be conducted. In this way, a temporarily fixed state can be achieved, so that the positioning operation using the wedges 57 can be easily conducted in another process, whereby an improvement can be achieved in terms of the cycle time of the equipment.

Here, the wedges 57 may generally be formed of glass. However, when the first frame plate 52 is formed of a resin, its coefficient of thermal expansion is larger than that of glass, so that, due to the difference in thermal expansion, the wedges 57 are liable to be separated from the frame plates or the wedges 57 may be damaged as a result of changes in temperature. To avoid this, it is desirable for the wedges 57 to be formed of a resin such as an acrylic resin. Further, by forming the wedges 57 of an acrylic material, molding is possible, so that a substantial reduction in cost can be achieved as compared with the case in which glass material is used. By using a material which allows transmission of ultraviolet rays as the material of the wedges 57, it is possible to use an ultraviolet setting type adhesive, which involves little rise in temperature and requires a short time for curing, as the adhesive for gluing and fixing the wedges 57.

Further, as a result of the formation of the wedge guide surfaces 52e on the first frame plate 52, upper and lower end surfaces 52f and 52g are formed, and the wedges 57 are guided by these three surfaces. That is, when this portion is filled with adhesive and then the wedge 57 is inserted, the wedge 57 is automatically led to the interior while being guided by these three surfaces due to the surface tension of the adhesive. Thus, an improvement is achieved in terms of resistance to disturbances experienced during the process, and the mounting of the wedges 57 is facilitated. While in this example an adhesive is used for the temporal fixation of the panel frame plate 51 to the intermediate frame plate 55, it is also possible to adopt soldering or the like for the purpose. When the first frame plate 52, etc. are formed of resin, a metal member may be attached to the joint section of engagement holes 52d and engagement protrusions 55d or a metalization layer may be formed in the joint section of engagement holes 52d and engagement protrusions 55d.

Next, the first frame plate 52, the intermediate frame plate 55 and the fixation frame plate 54 may consist of a molded product of a thermosetting resin mixed with glass fibre or calcium carbonate. When such a resin material is used, its coefficient of thermal expansion becomes nearer to that of glass as compared with ordinary resin materials. Thus, in the condition in which it is attached to the prism composite 22, pixel deviation, etc. attributable to thermal deformation can be avoided. Here, while it is possible, as described above, to use an ultraviolet setting type adhesive as the adhesive for gluing and fixing the fixation frame plate 54 to the prism composite 22, it is desirable to apply a ground surface processing material to achieve a higher level of adhesiveness. That is, in the prism composite 22, the incident surface 22R for the red beam and the incident surface 22B for the blue beam are opposed to each other, as described above. A part of the blue beam may be transmitted through the reflection layer of the prism composite 22 to reach the incident surface 22R for the red beam on the opposite side. When such a transmitted beam is allowed to be incident upon the liquid crystal panel 40R, malfunction occurs. To avoid this malfunction, a filter is attached to the incident surface 22R for the red beam to thereby intercept such transmitted beam.

It is because the influence of the transmitted beam of the blue beam, which has the shortest wavelength among three colour beams, is the most significant that a filter is only attached to the incident surface 22R for the red beam. When the influence of such transmitted beam of some other colour beam is significant, a filter may be provided on a surface other than the surface 22R, or a plurality of filters may be provided on a plurality of surfaces.

However, when such a filter exists, the ultraviolet radiation applied at the time of gluing and fixing may be intercepted, with the result that some portions of the ultraviolet setting type adhesive for gluing and fixing the fixation frame plates 54 to the incident surfaces 22R, 22G and 22B of the prism composite 22 are not sufficiently irradiated with ultraviolet rays. To avoid this problem and reliably glue and fix the fixation frame plate 54 to the incident surface 22R, it is desirable, as described above, to apply a ground surface processing material to these adhesion surfaces and use an anaerobic type adhesive. It is naturally possible to perform a similar processing on an incident surface on which no such filter exists.

While in the above description an ultraviolet setting type adhesive is used, it is also possible to use other types of adhesive. For example, when a hot-melt type adhesive is used for the gluing and fixation of the fixation frame plate 54 and the wedges 57, there is no need to take into account the above problem due to the filter.

### (Modification of the Liquid Crystal Panel Unit 50R)

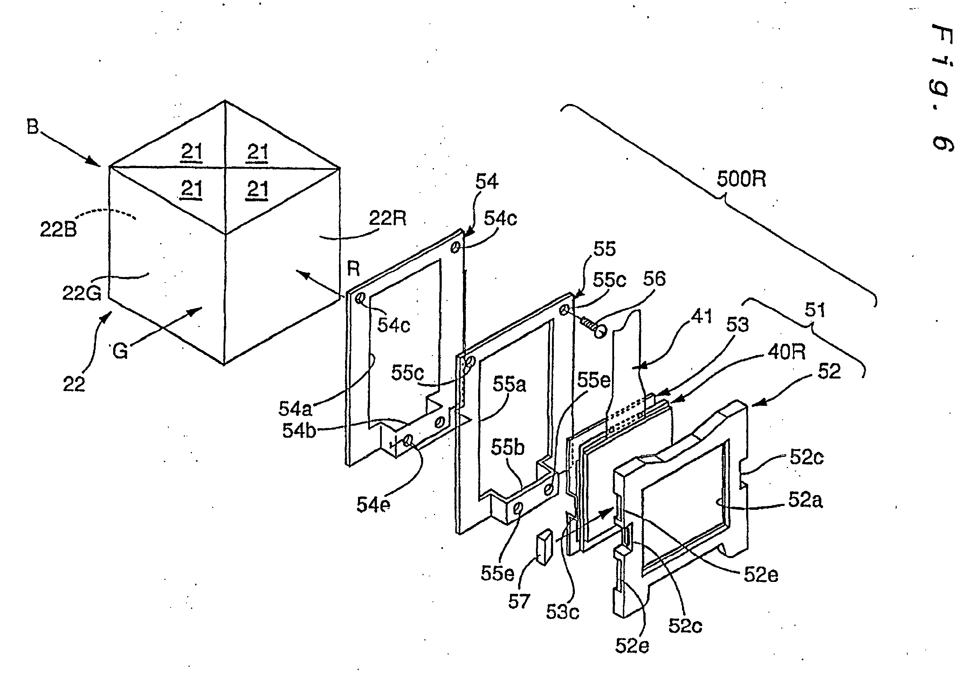

When there is no need to temporarily fix the panel frame member 51 to the intermediate frame plate 55, the temporal fixation mechanism formed between the panel frame member 51 and the intermediate frame plate 55 can be omitted as shown in Fig. 6. That is, the engagement holes 52d formed on the panel frame plate 51 side and the engagement protrusions 55d formed on the intermediate frame plate 55 side can be omitted. In this case, the panel frame member 51 is fixed to the intermediate frame member 55 solely by the wedges 57.

Also in the case in which a liquid crystal panel unit 500R constructed as shown in Fig. 6 is used, it is possible to obtain the above first and second effects to be achieved by the liquid crystal panel 50R. Further, it is effective in reducing the size of the prism unit 20.

### (Unclaimed Modification of the Liquid Crystal Panel Unit 50R)

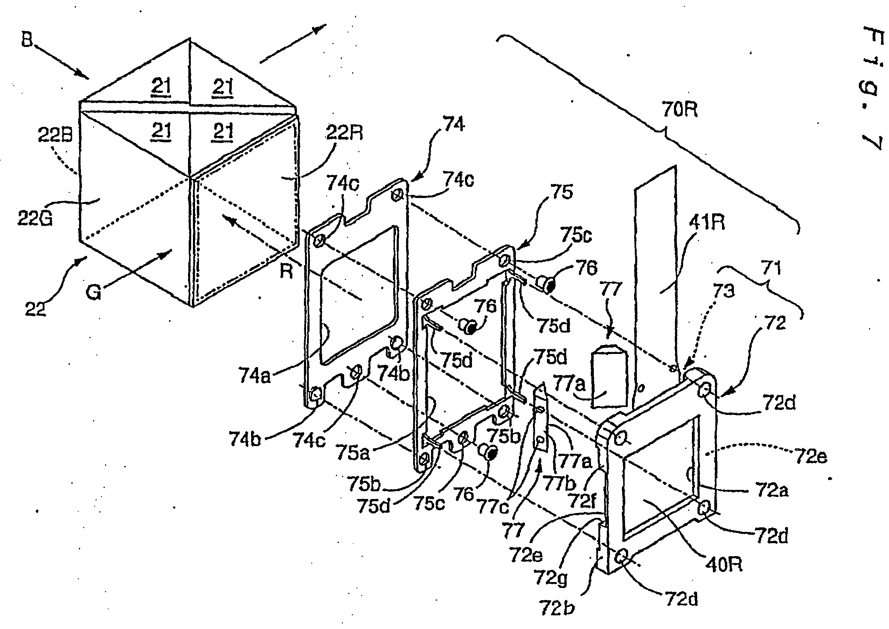

Fig. 7 is an exploded view of a liquid crystal panel unit 70R according to an unclaimed modification of the liquid crystal panel unit 50R. The components corresponding to those of the liquid crystal panel unit 50R shown in Fig. 5 are indicated by the same reference numerals, and a description thereof will be omitted. As shown in Fig. 7, the liquid crystal panel unit 70R is equipped with a panel frame plate 71 for holding the liquid crystal panel 40R. Like the panel frame plate 51 of the liquid crystal panel unit 50R, this panel frame plate 71 is equipped with first and second frame plates 72 and 73, and the liquid crystal panel 40R is placed and held between these frame plates. In the drawing, only the first frame plate 72 is shown, with the second frame plate 73 and the liquid crystal panel unit 40R being already mounted and fixed to the first frame plate 72 side. The liquid crystal panel unit 70R is further equipped with a fixation frame plate 74 glued and fixed to the light incident surface 22R of the prism composite 22. The panel frame plate 71 is detachably fixed to this fixation frame plate 74 through the determination of an intermediate frame plate 75.

The panel frame plate 71 is basically the same as the above-described panel frame plate 51 of the liquid crystal panel unit 50R. The first frame plate 72 thereof is equipped with a rectangular opening 72a for transmitting light and a peripheral wall 72b having a fixed thickness. The second frame plate 73 also has a rectangular opening (not shown) for transmitting light. The size of this second frame plate 73 is such that it can be just fitted into the inner side of the peripheral wall 72b. Thus, when the second frame plate 73 is fitted into the first frame plate 72 with the liquid crystal panel 40R being placed between the first and second frame plates 72 and 73, the panel frame plate 71 is formed in which the liquid crystal panel 40R is held between the frame plates 72 and 73.

Here, the fitting structure for the first frame plate 72 and the second frame plate 73 is basically the same as that for the first and second frame plates 52 and 53 constituting the panel frame plate 51 shown in Fig. 5. However, in the case of this example, hooks and engagement grooves to be engaged with the hooks are formed at upper and lower positions with guide grooves 72e - 72g of the first frame plate 72 therebetween. These sections are omitted in the drawing.

Next, the intermediate frame plate 75 has substantially the same size as the first frame plate 72 of the panel frame plate 71 and is equipped with a rectangular opening 75a for transmitting light. This intermediate frame plate 75 has in the four corners of the rectangular opening 75a engagement protrusions 75d extending perpendicularly from the surface of the frame plate. At the corresponding positions on the first frame plate 72 of the panel frame plate 71, there are formed engagement holes 72d into which these engagement protrusions can be inserted. Thus, when the panel frame plate 71 and the intermediate frame plate 75 are superimposed one upon the other with the engagement holes 72d engaged with the engagement protrusions 75d, a temporarily fixed state is achieved, in which the engagement protrusions 75d are inserted into the engagement holes 72d.

The fixation frame plate 74 is also a rectangular frame plate having a rectangular opening 74a for transmitting light. The back side of this fixation frame plate 74 is fixed to the light incident surface 22R of the prism composite 22 by means of an adhesive. Screw holes 74c are formed in both corners of the upper frame portion of this fixation frame plate 74 and at the centre with respect to the horizontal direction of the lower frame portion of the fixation frame plate 74. Screw holes 75c corresponding to these three screw holes 74c are formed in the intermediate frame plate 75. By inserting flat countersunk head screws 76 for fastening into the corresponding screw holes 74c and 75c, the intermediate frame plate 75 is fastened to the fixation frame plate 74. In this example, the intermediate frame plate 75 is fixed to the fixation frame plate 74 by three screws 76. The number of screws may be four as in the case shown in Fig. 5, or it may be larger than that. Generally speaking, the smaller the number of screws, the smaller the number of screwing processes. Engagement protrusions 74b are formed in the right and left corners of the lower frame portion of the fixation frame plate 74, and engagement holes 75b corresponding to these two engagement protrusions 74b are formed in the corresponding right and left corners of the lower frame portion of the intermediate frame plate 75. Thus, when fixing by the screws 76, the engagement holes 75b of the intermediate frame plate 75 are matched with the engagement protrusions 74b of the fixation frame plate 74, and the intermediate frame plate 75 is pushed toward the fixation frame plate 74, whereby the intermediate frame plate 75 can be temporarily fixed to the fixation frame plate 74. This makes it possible to achieve a further improvement in terms of the positioning accuracy for these frame plates.

The liquid crystal panel unit 70R of this comparative example is also equipped with positioning means for positioning the panel frame plate 71 with respect to the intermediate frame plate 75 fixed to the fixation frame plate 74. This positioning means is equipped with two wedges 77. Guide surfaces 72e - 72g against which the slant faces 77a of these wedges 77 abut are formed at the centre with respect to the vertical dimension of the right and left side surfaces of the peripheral wall 72b of the first frame plate 72 of the panel frame plate 71. When the panel frame plate 71 is temporarily fixed to the intermediate frame plate 75, wedge insertion grooves are formed between the wedge guide grooves 72e of the first frame plate 72 and the frame portion of the intermediate frame plate 75 opposite thereto. Thus, after temporarily fixing the panel frame plate 71 to the intermediate frame plate 75, the two wedges 77 are fitted into the right and left sides of the first frame plate 72, and the insertion amount of these wedges 77 is adjusted, whereby it is possible to perform positioning of the liquid crystal panel 40R. The process for forming the prism unit 20 is the same as that in the above-described example, so that a description thereof will be omitted. The liquid crystal panel unit 70R, constructed as described above, also provides the same effect as the liquid crystal panel unit 50R shown in Fig. 5.

Further, unlike the cases shown in Figs. 5 and 6, this comparative example adopts frame plates having a flat configuration as the fixation frame plate 74 and the intermediate frame plate 75. As described with reference to Fig. 2(B), a fan 15B is arranged underneath the prism composite 22, and cooling air flows from below upwards. To prevent the generation of disturbance in this air flow, it is desirable to arrange a flow regulating plate at a position above the fan 15B. Since the fixation plate 74 and the intermediate frame plate 75 are flat plates, it is possible to extend the mounting position for the flow regulating plate to a position directly below the liquid crystal panel 70R. Thus, it is possible to effectively cause the cooling air to flow from below upward. Further, since the configuration of these frame plates is simple, the working of the parts is easy, which also provides an advantage of an improvement in parts accuracy.

In addition to this, in the liquid crystal panel unit 70, two wedges 77 for positioning are used, and they are mounted to the central positions with respect to the vertical dimension of the right and left sides of the first frame plate 72 and the intermediate frame plate 75 and glued and fixed thereto. When the positions at which the wedges 77 are glued and fixed are not appropriate, there is a fear of an excessive concentration of stress being generated in the components due to thermal deformation of the first frame plate 72, the intermediate frame plate 75 or the wedges 77. Further, on account of that, there is also a fear of the wedges 77 being separated from the first frame plate 72 or the intermediate frame plate 75. However, as described above, the wedges 77 are glued and fixed to the central positions of the right and left sides, and the first frame plate 72 and the intermediate frame plate 75 can freely undergo thermal deformation in the vertical direction around these portions. Thus, the degree of constraint of thermal deformation of these frame plates is low, so that it is possible to avoid problems such as an undesirable concentration of stress and separation of the wedges.

Further, as can be seen from Fig. 7, each of the wedges 77 of this example has two blind holes 77c on the back surface 77b thereof. These blind holes serve as engagement sections for chucking when the wedges 77 are chucked by using a jig. By forming these blind holes 77c, the chucking is facilitated. Thus, the handling of the wedges is facilitated.

In this comparative example, blind holes 77c for the engagement at the time of chucking are formed on the back side of the wedges 77. The engagement sections for chucking may be formed on other components. For example, engagement sections for chucking such as blind holes may be formed on the fixation plate 74 or on the outer surface of the peripheral wall 72a of the panel frame plate 71.

### (Another unclaimed modification of the Liquid Crystal Panel Unit)

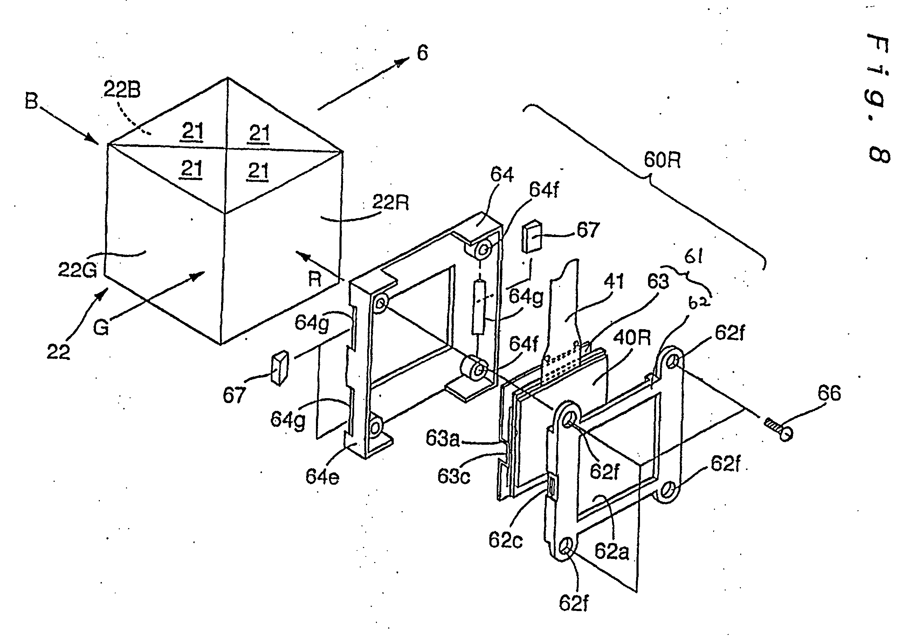

Fig. 8 shows another unclaimed modification of the liquid crystal panel unit. A liquid crystal panel unit 60R shown in this drawing also has a panel frame plate 61 for holding the liquid crystal panel 40R, and a fixation frame plate 64 which is glued and fixed to the surface 22R of the prism composite 22. However, there is no portion corresponding to the intermediate frame plate 55, 75 in the above-described examples, and the panel frame plate 61 is directly screwed to the fixation frame plate 64. This will be described in more detail. The construction of the panel frame plate 61 is the same as the construction of the panel frame plate 51 of Fig. 5 described above. It is equipped with a first frame plate 62 and a second frame plate 63, with the liquid crystal panel 40R being placed therebetween. To keep these first and second frame plates 62 and 63 in the engaged state, engagement hooks 63c and engagement claws 62c are formed. Further, these first and second frame plates 62 and 63 have rectangular openings 62a and 63a for transmitting light.

The fixation frame plate 64, on the other hand, has a holder in the periphery of the rectangular frame portion, i.e., a peripheral wall 64e of a fixed width. The panel frame plate 61 can be fitted into the interior of the peripheral wall 64e. Further, screw holes 64f are formed in the four corners of the inner periphery of the peripheral wall 64e. Screw holes 62f corresponding to the screw holes 64f are formed in the four corners of the first frame plate 62 of the panel frame plate 61. By threadedly engaging screws 66 with these screw holes, the panel frame plate 61 is fastened to the fixation frame plate 64 by screws.

On one side surface of the peripheral wall 64e of the fixation frame plate 64, upper and lower wedge guide surfaces 64g are formed. On the other side surface, a wedge guide surface 64g is formed at a central position with respect to the vertical dimension.

The liquid crystal panel unit 60R, constructed as described above, is formed by fixing the panel frame plate 61 to the fixation frame plate 64 by means of the screws 66. After this, the positioning with respect to the surface 22R of the prism composite 22 is effected. In this condition, three wedges 67 are inserted into the wedge guide surfaces 64g formed, and the positioning is maintained such that the gap is reduced to zero due to the surface tension of the ultraviolet setting type adhesive already applied to the joint surfaces of the wedges. After the positioning of the wedges 67 has been thereby effected, ultraviolet radiation is applied from the exposed end surfaces of the wedges 67 to cure the adhesive for gluing and fixation.

It is also possible to arrange one wedge 67 at the centre of each side of the peripheral wall 64e of the fixation frame plate. When the fixation frame plate 64 is enlarged, it is possible to minimise the influence of the expansion and contraction as a result of temperature changes, thereby attaining an improvement in reliability. In the liquid crystal panel unit 60R of this construction also, the liquid crystal panel 40R is covered with and protected by the frame member 61. Further, the frame member 61 holding the liquid crystal panel 40R is fastened by screws to the fixation frame plate 64 holding the liquid crystal panel 40R. Thus, the liquid crystal panel 40R is in a protected state, and no external light is allowed to intrude. Further, when replacing the liquid crystal panel with a new one, it is only necessary to detach the screws, so that the replacing operation is facilitated. Further, there is no fear of the surface of the prism composite being damaged during the replacing operation. Further, since the liquid crystal panel unit 60R of this comparative example is composed of the panel frame plate 61 and the fixation frame plate 64, it is possible to achieve a general reduction in weight and, further, a reduction in thickness. In particular, when further reducing the size of the liquid crystal panel units 60R, 60G and 60B, a problem may be involved: when the thick liquid crystal panel units are attached to the three surfaces, interference between the liquid crystal panels may occur at the edge portions, thereby making it impossible to reduce the size of the optical system portion comprising the prism composite 22. In this comparative example, it is possible to form a small-sized and thin liquid crystal panel unit 60, so that a reduction in the size of the optical system portion comprising the prism composite 22 can be easily realised.

Further, a resin material can be used for the fixation frame plate 64 and the first frame plate 62, whereby it is possible to achieve a reduction in weight and an enhancement in the adhesion strength between the prism support plate 33 and the prism unit 20, thereby making it possible to realise a product resistant to impacts. Further, in the liquid crystal panel unit 60R of this comparative example, when replacing the liquid crystal panel 40R, it is only necessary to detach the panel frame plate 61 for replacement, so that the replacing operation is facilitated. In particular, in the operation of mounting a new frame plate 61, when this panel frame plate 61 is directly attached to the fixation frame plate 64, the focusing position thereof is determined. When the components are produced such that the error in the focusing position at the time of this mounting is within the permissible depth of focus, there is no need to perform focus adjustment operation at the time of mounting the panel frame plate, whereby the mounting operation is facilitated.

It is also possible to adopt a system in which, after the replacement, several parts of the outer portion of the first frame plate 62 is glued and fixed to the fixation frame plate without using the screws 66.

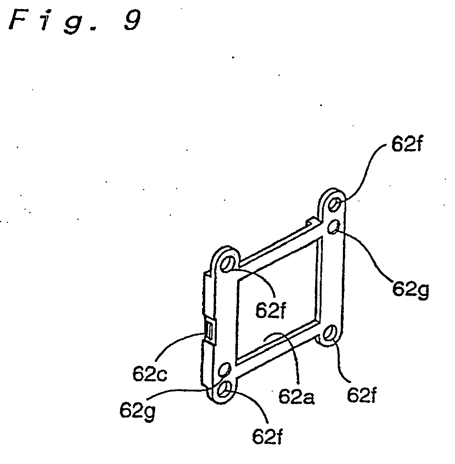

As shown in Fig. 9, it may be possible to adopt an arrangement in which, of the four corners of the first fixation frame plate 62, blind holes 62g are provided at two diagonally opposed positions, and, by utilising them, the first fixation frame plate 62 is chucked by an adjusting device to perform positioning with respect to the face of the prism composite 22. As described above, after the adhesive for gluing and fixing the first frame plate 62 has been completely cured, the chucking by the adjusting device is cancelled. By providing such blind holes, the positioning operation is facilitated.

The blind holes 62g for chucking may be in the form of notches provided in the outer periphery of the first frame plate 62. Further, it is also possible to form an engagement section as a chucking section in the outside portion which does not interfere with the peripheral wall 64e of the fixation frame plate 64.

### [Advantages]

As described above, in the projection type display device of the present invention, the light valve can be reliably positioned with respect to the light synthesising means, so that the deviation amount in pixel matching is restrained, and the focus adjustment can be correctly conducted, whereby a further level of accuracy can be easily achieved. In addition, the size of the light synthesising means can be reduced in spite of the construction in which the light valve can be replaced, which contributes to a reduction in the size and weight of the product and makes it possible to obtain a product having a high reliability against disturbances. The mounting sections for the light valve and the intermediate frame plate or the fixation frame plate are arranged on the vertical wall, whereby a vent portion for cooling air is provided and the requisite cleaning performance can be secured.

In addition, regarding the production, the light valve arranged on the light incident surface of the light synthesising means is held with its periphery being protected by the light valve frame plate. Further, the light valve frame plate holding the light valve is detachably mounted to the fixation frame plate glued and fixed to the light incident surface of the light synthesising means. Thus, in accordance with the present invention, the periphery of the light valve is covered with the light valve frame plate and thereby protected, so that there is no fear of the light valve being damaged during the handling thereof. Further, no external light is allowed to intrude to cause malfunction in the light valve. Further, when a malfunction occurs in the light valve, it is possible to replace only the light valve without damaging the surface of the light synthesising means, which is advantageous from the economical point of view. Furthermore, the light valve replacing operation can be conducted easily and correctly by the same producing apparatus.

The aforegoing description has been given by way of example only and it will be appreciated by a person skilled in the art that modifications can be made without departing from the scope of the present invention.

## Claims

1. A mounting mechanism for mounting a light valve (40R, 40G, 40B) onto a side surface (22R, 22G, 22B) of a prism (20, 22),
said mounting mechanism comprising a fixation frame plate (54) for being fixed on the side surface (22R, 22G, 22B) of the prism (20, 22) and a light valve frame plate (51) for holding the light valve (40R, 40G, 40B), the light valve frame plate (51) being detachably fixable onto the fixation frame plate (54), and the light valve frame plate (51) comprises a peripheral wall (52b) covering a periphery of the light valve (40R, 40G, 40B), **characterized in that**
the fixation frame plate (54) comprises a protruding frame (54b) and the light valve frame plate (51) is held by being placed on the protruding frame (54b).

2. The mounting mechanism according to claim 1, further comprising an adjusting member (57) that is glued and fixed between the light valve frame plate and the side surface of the prism, the adjusting member being for adjusting the position of the light valve relative to the prism.

3. The mounting mechanism according to claim 2, wherein the light valve frame plate (51). comprises an adjusting member guiding means (52e).

4. The mounting mechanism according to claim 2, wherein the adjusting member (57), is provided at a substantially centre portion (52c) on one side of the light valve frame plate (51).

5. The mounting mechanism according to claim 1, wherein each of the fixation frame plate (54) and the light valve frame plate (51) comprises an engagement section (52a) for chucking the respective plate at a predetermined position.

6. The mounting mechanism according to claim 1, wherein the light valve (40R, 40G, 40B) is a liquid crystal panel.

7. A projector which modulates each of the plurality of color beams through a corresponding light valve (40R, 40G, 40B), synthesises the modulated color beams by a prism (20, 22), and projects a synthesised beam through a projection lens (6),
said projector comprising a fixation frame plate (54) for fixing on a side surface (22R, 22G, 22B) of the prism and a light valve frame plate (51) for holding the light valve (40R, 40G, 40B), the light valve frame plate (51) being detachably fixed onto the fixation frame plate (54) and the light valve frame plate (51) comprises a peripheral wall (52b) covering a periphery of the light valve (40R, 40G, 40B), **characterized in that**
the fixation frame plate (54) comprises a protruding frame (54b) and the light valve frame plate (51) is held by being placed on the protruding frame (54b); and

8. The projector according to claim 7, further comprising an adjusting member (57)
that is glued and fixed between the light valve frame plate (51) and the side surface of the prism, the adjusting member (57) being for adjusting the position of the light valve relative to the prism.

9. The projector according to claim 8, wherein the light valve frame plate comprises an adjusting member guiding means (52e).

10. The projector according to claim 8, wherein the adjusting member (57) is provided at a substantially centre portion (52c) on one side of the light valve frame plate (51).

11. The projector according to claim 7, wherein each of the fixation frame plate (54) and the light valve frame plate (51) comprises an engagement section (52a) for chucking the respective plate at a predetermined position.

12. The projector according to claim 7, wherein the light valve (40R, 40G, 40B) is a liquid crystal panel.

13. A mounting mechanism for mounting a light valve (40R, 40G, 40B) onto a side surface (22R, 22G, 22B) of a prism (20, 22) comprising a positioning means (57) for positioning said light valve (40R; 40G, 40B),
said mounting mechanism comprising:
a fixation frame plate (54) for fixing on the side surface (22R, 22G, 22B) of the prism (20, 22); **characterized in that** it further comprises
an intermediate frame plate (55) for being detachably fixed on the fixation frame plate (54); and
a light valve frame plate (51) for holding the light valve (40R, 40G, 40B);
wherein the fixation frame plate (54) and the intermediate frame plate (55) each comprise a protruding frame (54b, 55b), the protruding frame (54b) of the fixation frame plate (54) fitting into the protruding frame (55b) of the intermediate frame plate (55), and the light valve frame plate (51) is held by being placed on the protruding frame (54B, 55B); and
the light valve frame plate (51) comprises a peripheral wall (52b) covering a periphery of the light valve.

14. The mounting mechanism according to claim 13, further comprising a temporal fixing mechanism (52d, 55d) that temporarily fixes the intermediate frame plate (55) and the light valve frame plate (51).

15. The mounting mechanism according to claim 14, wherein the temporal fixing mechanism (52d, 55d) comprises an engagement protrusion (55d) formed on one of the intermediate frame plate (55) and the light valve frame plate (51) and an engagement hole (52d) formed in the other plate.

16. The mounting mechanism according to claim 15, wherein the engagement protrusion (55d) inserted into the engagement hole (52d) is fixed thereto.

17. The mounting mechanism according to claim 13, wherein the positioning means comprises an adjusting member (57) for adjusting the position of the light valve relative to the prism.

18. The mounting mechanism according to claim 17, wherein the light valve frame plate (51) further comprises an adjusting member guiding means (52e).

19. The mounting mechanism according to claim 13, wherein the positioning means is located at a substantially center portion (52c) on one side of the light valve frame plate.

20. The projector according to claim 13, wherein the light valve (40R, 40G, 40B) is a liquid crystal panel.

## Revendications

1. Mécanisme de montage pour monter un modulateur de lumière (40R, 40G, 40B) sur une surface latérale (22R, 22G, 22B) d'un prisme (20, 22),
ledit mécanisme de montage comprenant une plaque à cadre de fixation (54) à fixer sur la surface latérale (22R, 22G, 22B) du prisme (20, 22), et une plaque à cadre du modulateur de lumière(51) pour maintenir le modulateur de lumière (40R, 40G, 40B), la plaque à cadre du modulateur de lumière (51) pouvant être fixée de manière détachable sur la plaque à cadre de fixation (54) et la plaque à cadre du modulateur de lumière (51) comprenant une cloison périphérique (52b) recouvrant une périphérie du modulateur de lumière (40R, 40G, 40B),
**caractérisé en ce que** la plaque à cadre de fixation (54) comprenne un cadre proéminent (54b), et **en ce que** la plaque à cadre du modulateur de lumière (51) est maintenue en étant placée sur le cadre proéminent (54b).

2. Mécanisme de montage selon la revendication 1, comprenant par ailleurs un élément d'ajustement (57) collé et fixé entre la plaque à cadre du modulateur de lumière et la surface latérale du prisme, l'élément d'ajustement servant à ajuster la position du modulateur de lumière par rapport au prisme.

3. Mécanisme de montage selon la revendication 2, où la plaque à cadre du modulateur de lumière (51) comprend un moyen de guidage de l'élément d'ajustement (52e).

4. Mécanisme de montage selon la revendication 2, où l'élément d'ajustement (57) est fournit au niveau d'une partie essentiellement centrale (52c) sur un côté de la plaque à cadre du modulateur de lumière (51) .

5. Mécanisme de montage selon la revendication 1, où chacune parmi la plaque à cadre de fixation (54) et la plaque à cadre du modulateur de lumière (51) comprend une section d'engrènement (52a) pour serrer la plaque respective dans une position prédéfinie.

6. Mécanisme de montage selon la revendication 1, où le modulateur de lumière (40R, 40G, 40B) est un panneau à cristaux liquides.

7. Projecteur qui module chacun parmi la pluralité des rayons colorés grâce à un modulateur de lumière correspondant (40R, 40G, 40B), synthétise les rayons colorés modulés grâce à un prisme (20, 22), et projette un rayon synthétisé à travers une lentille de projection (6),
ledit projecteur comprenant une plaque à cadre de fixation (54) pour la fixation sur une surface latérale (22R, 22G, 22B) du prisme, et une plaque à cadre du modulateur de lumière (51) pour le maintien du modulateur de lumière (40R, 40G, 40B) , la plaque à cadre du modulateur de lumière (51) étant fixée de manière détachable sur la plaque à cadre de fixation (54) et la plaque à cadre du modulateur de lumière (51) comprenant une cloison périphérique (52b) recouvrant une périphérie du modulateur de lumière (40R, 40G, 40B), **caractérisé en ce que**
la plaque à cadre de fixation (54) comprenne un cadre proéminent (54b), et **en ce que** la plaque à cadre du modulateur de lumière (51) est maintenue en étant placée sur le cadre proéminent (54b).

8. Projecteur selon la revendication 7, comprenant par ailleurs un élément d'ajustement (57) collé et fixé entre la plaque à cadre du modulateur de lumière (51) et la surface latérale du prisme, l'élément d'ajustement (57) servant à ajuster la position du modulateur de lumière par rapport au prisme.

9. Projecteur selon la revendication 8, où la plaque à cadre du modulateur de lumière comprend un moyen de guidage de l'élément d'ajustement (52e).

10. Projecteur selon la revendication 8, où l'élément d'ajustement (57) est fournit au niveau d'une partie essentiellement centrale (52c) sur un côté de la plaque à cadre du modulateur de lumière (51).

11. Projecteur selon la revendication 7, où chacune parmi la plaque à cadre de fixation (54) et la plaque à cadre du modulateur de lumière (51) comprend une section d'engrènement (52a) pour serrer la plaque respective dans une position prédéfinie.

12. Projecteur selon la revendication 7, où le modulateur de lumière (40R, 40G, 40B) est un panneau à cristaux liquides.

13. Mécanisme de montage pour monter un modulateur de lumière (40R, 40G, 40B) sur une surface latérale (22R, 22G, 22B) d'un prisme (20, 22) comprenant un moyen de positionnement (57) pour positionner ledit modulateur de lumière (40R, 40G, 40B),
ledit mécanisme de montage comprenant :
une plaque à cadre de fixation (54) pour la fixation sur la surface latérale (22R, 22G, 22B) du prisme (20, 23) ; **caractérisé en ce qu'**il comprenne par ailleurs : une plaque à cadre intermédiaire (55) à fixer de manière détachable sur la plaque à cadre de fixation (54) ; et
une plaque à cadre du modulateur de lumière (51) pour maintenir le modulateur de lumière (40R, 40G, 40B) ;
la plaque à cadre de fixation (54) et la plaque à cadre intermédiaire (55) comprenant chacune un cadre proéminent (54b, 55b), le cadre proéminent (54b) de la plaque à cadre de fixation (54) s'ajustant dans le cadre proéminent (55b) de la plaque à cadre intermédiaire (55), et la plaque à cadre du modulateur de lumière (51) étant maintenue en la plaçant sur le cadre proéminent (54b, 55b) ; et
la plaque à cadre du modulateur de lumière (51) comprenant une cloison périphérique (52b) recouvrant une périphérie du modulateur de lumière.

14. Mécanisme de montage selon la revendication 13, comprenant par ailleurs un mécanisme de fixation temporaire (52d, 55d) qui fixe de manière temporaire la plaque à cadre intermédiaire (55) et la plaque à cadre du modulateur de lumière (51).

15. Mécanisme de montage selon la revendication 14, où le mécanisme de fixation temporaire (52d, 55d) comprend une protubérance d'engrènement (55d) formée sur l'une parmi la plaque à cadre intermédiaire (55) et la plaque à cadre du modulateur de lumière (51), et un trou d'engrènement (52) formé dans l'autre plaque.

16. Mécanisme de montage selon la revendication 15, où la protubérance d'engrènement (55d) insérée dans le trou d'engrènement (52d) y est fixée dessus.

17. Mécanisme de montage selon la revendication 13, où le moyen de positionnement comprend un élément d'ajustement (57) pour ajuster la position du modulateur de lumière par rapport au prisme.

18. Mécanisme de montage selon la revendication 17, où la plaque à cadre du modulateur de lumière (51) comprend par ailleurs un moyen de guidage de l'élément d'ajustement (52e).

19. Mécanisme de montage selon la revendication 13, où le moyen de positionnement est situé au niveau d'une partie essentiellement centrale (52c) sur un côté de la plaque à cadre du modulateur de lumière.

20. Projecteur selon la revendication 13, où le modulateur de lumière (40R, 40G, 40B) est un panneau à cristaux liquides.

## Patentansprüche

1. Befestigungsmechanismus für die Befestigung eines Lichtventils (40R, 40G, 40B) an einer Seitenfläche (22R, 22G, 22B) eines Prismas (20, 22),
wobei der Befestigungsmechanismus eine Fixierungsrahmenplatte (54) umfasst, die an der Seitenfläche (22R, 22G, 22B) des Prismas (20, 22) fixiert wird, und eine Lichtventilrahmenplatte (51), die das Lichtventil (40R, 40G, 40B) hält, wobei die Lichtventilrahmenplatte (51) an der Fixierungsrahmenplatte (54) lösbar fixierbar ist, und die Lichtventilrahmenplatte (51) eine periphere Wand (52b) umfasst, die eine Peripherie des Lichtventils (40R, 40G, 40B) bedeckt, **dadurch gekennzeichnet, dass**
die Fixierungsrahmenplatte (54) einen vorstehenden Rahmen (54b) umfasst und die Lichtventilrahmenplatte (51) gehalten wird, indem sie auf dem vorstehenden Rahmen (54b) angeordnet wird.

2. Befestigungsmechanismus nach Anspruch 1, des Weiteren umfassend ein Stellelement (57), das zwischen der Lichtventilrahmenplatte und der Seitenfläche des Prismas geklebt und fixiert ist, wobei das Stellelement zum Einstellen der Position des Lichtventils relativ zu dem Prisma dient.

3. Befestigungsmechanismus nach Anspruch 2, wobei die Lichtventilrahmenplatte (51) ein Stellelementführungsmittel (52e) umfasst.

4. Befestigungsmechanismus nach Anspruch 2, wobei das Stellelement (57) an einem im Wesentlichen zentralen Abschnitt (52c) an einer Seite der Lichtventilrahmenplatte (51) bereitgestellt ist.

5. Befestigungsmechanismus nach Anspruch 1, wobei jede von der Fixierungsrahmenplatte (54) und der Lichtventilrahmenplatte (51) einen Eingriffsabschnitt (52a) zum Einspannen der entsprechenden Platte an einer vorbestimmten Position umfasst.

6. Befestigungsmechanismus nach Anspruch 1, wobei das Lichtventil (40R, 40G, 40B) eine Flüssigkristallplatte ist.

7. Projektor, der jeden der Mehrzahl von Farbstrahlen durch ein entsprechendes Lichtventil (40R, 40G, 40B) moduliert, die modulierten Farbstrahlen durch ein Prisma (20, 22) synthetisiert, und einen synthetisierten Stahl durch eine Projektionslinse (6) projiziert,
wobei der Projektor eine Fixierungsrahmenplatte (54) umfasst, die an einer Seitenfläche (22R, 22G, 22B) des Prismas (20, 22) fixiert wird, und eine Lichtventilrahmenplatte (51), die das Lichtventil (40R, 40G, 40B) hält, wobei die Lichtventilrahmenplatte (51) an der Fixierungsrahmenplatte (54) lösbar fixiert ist, und die Lichtventilrahmenplatte (51) eine periphere Wand (52b) umfasst, die eine Peripherie des Lichtventils (40R, 40G, 40B) bedeckt, **dadurch gekennzeichnet, dass**
die Fixierungsrahmenplatte (54) einen vorstehenden Rahmen (54b) umfasst und die Lichtventilrahmenplatte (51) gehalten wird, indem sie auf dem vorstehenden Rahmen (54b) angeordnet wird.

8. Projektor nach Anspruch 7, des Weiteren umfassend ein Stellelement (57), das zwischen der Lichtventilrahmenplatte und der Seitenfläche des Prismas geklebt und fixiert ist, wobei das Stellelement zum Einstellen der Position des Lichtventils relativ zu dem Prisma dient.

9. Projektor nach Anspruch 8, wobei die Lichtventilrahmenplatte ein Stellelementführungsmittel (52e) umfasst.

10. Projektor nach Anspruch 8, wobei das Stellelement (57) an einem im Wesentlichen zentralen Abschnitt (52c) an einer Seite der Lichtventilrahmenplatte (51) bereitgestellt ist.

11. Projektor nach Anspruch 7, wobei jede von der Fixierungsrahmenplatte (54) und der Lichtventilrahmenplatte (51) einen Eingriffsabschnitt (52a) zum Einspannen der entsprechenden Platte an einer vorbestimmten Position umfasst.

12. Projektor nach Anspruch 7, wobei das Lichtventil (40R, 40G, 40B) eine Flüssigkristallplatte ist.

13. Befestigungsmechanismus für die Befestigung eines Lichtventils (40R, 40G, 40B) an einer Seitenfläche (22R, 22G, 22B) eines Prismas (20, 22), umfassend ein Positioniermittel 857) zum Positionieren des Lichtventils (40R, 40G, 40B), wobei der Befestigungsmechanismus umfasst:
eine Fixierungsrahmenplatte (54), die an der Seitenfläche (22R, 22G, 22B) des Prismas (20, 22) fixiert wird, **dadurch gekennzeichnet, dass** er des Weiteren umfasst:
eine Zwischenrahmenplatte (55), die lösbar an der Fixierungsrahmenplatte (54) fixiert ist; und
eine Lichtventilrahmenplatte (51) zum Halten des Lichtventils (40R, 40G, 40B);
wobei die Fixierungsrahmenplatte (54) und die Zwischenrahmenplatte (55) jeweils einen vorstehenden Rahmen (54b, 55b) umfassen, der vorstehende Rahmen (54b) der Fixierungsrahmenplatte (54) in dem vorstehenden Rahmen (55b) der Zwischenrahmenplatte (55) sitzt, und die Lichtventilrahmenplatte (51) gehalten wird, indem sie auf dem vorstehenden Rahmen (54b, 55b) angeordnet wird; und
die Lichtventilrahmenplatte (51) eine periphere Wand (52b) umfasst, die eine Peripherie des Lichtventils bedeckt.

14. Befestigungsmechanismus nach Anspruch 13, des Weiteren umfassend einen temporären Fixierungsmechanismus (52d, 55d), der die Zwischenrahmenplatte und die Lichtventilrahmenplatte (51) temporär fixiert.

15. Befestigungsmechanismus nach Anspruch 14, wobei der temporäre Fixierungsmechanismus (52d, 55d) einen Eingriffsfortsatz (55d) umfasst, der an einer von der Zwischenrahmenplatte (55) und der Lichtventilrahmenplatte (51) ausgebildet ist, und ein Eingriffsloch (52d), das in der anderen Platte gebildet ist.

16. Befestigungsmechanismus nach Anspruch 15, wobei der Eingriffsfortsatz (55d), der in das Eingriffsloch eingesetzt ist, an diesem fixiert ist.

17. Befestigungsmechanismus nach Anspruch 13, wobei das Positioniermittel ein Stellelement (57) zum Einstellen der Position des Lichtventils relativ zu dem Prisma umfasst.

18. Befestigungsmechanismus nach Anspruch 17, wobei die Lichtventilrahmenplatte (51) des Weiteren ein Stellelementführungsmittel (52e) umfasst.

19. Befestigungsmechanismus nach Anspruch 13, wobei das Positioniermittel an einem im Wesentlichen zentralen Abschnitt (52c) an einer Seite der Lichtventilrahmenplatte bereitgestellt ist.

20. Projektor nach Anspruch 13, wobei das Lichtventil (40R, 40G, 40B) eine Flüssigkristallplatte ist.
